# EUROPÄISCHE PATENTSCHRIFT

(11) **EP 2 727 891 B1**
(45) Veröffentlichungstag und Bekanntmachung des Hinweises auf die Patenterteilung: **27.12.2017**
(21) Anmeldenummer: 13191138.0
(22) Anmeldetag: 31.10.2013
(51) Int. Cl.: C03C 25/10, C03C 25/26, C03C 25/32, C03C 25/34, D04H 1/4209, D04H 1/4218, D04H 1/64, C03C 25/40, D04H 1/587

(54) **Reversibel Wasser bindendes Mineralwolleprodukt**
Reversibly water binding mineral wool product
Produit en laine minérale réversible capable de fixer l'eau

(30) Priorität: 31.10.2012 DE 102012219988
(43) Veröffentlichungstag der Anmeldung: 07.05.2014
(73) Patentinhaber: Saint-Gobain Isover, 92400 Courbevoie (FR)
(72) Erfinder: Hünig, Hagen, 68549 Ilvesheim (DE); Passon, Ulrich, 76131 Karlsruhe (DE); Kasper, Franz-Josef, 68526 Ladenburg (DE)
(74) Vertreter: Winter, Brandl, Fürniss, Hübner, Röss, Kaiser, Polte - Partnerschaft mbB

(56) Entgegenhaltungen:
- DE-A1- 19 606 394
- DE-A1-102005 056 791
- DE-A1-102007 047 373
- DE-T2- 69 315 393
- DE-U1-202009 008 493
- US-A- 4 795 678
- US-A1- 2011 130 062

## Beschreibung

Die vorliegende Erfindung betrifft ein Mineralwolleprodukt, welches reversibel Wasser bindet gemäß Anspruch 1, dessen Verwendung zur Innenraumdämmung gemäß Anspruch 12 und eine Beschichtungsmasse gemäß Anspruch 13.

Die Außendämmung von Gebäuden auf Basis von Mineralwolledämmplatten oder Schaumkunststoffen ist aus verschiedenen Gründen wie insbesondere den Erhalt des nutzbaren Innenraums oder eine Verlagerung des Taupunkts nach außen bevorzugt. Eine Außendämmung ist für einen erheblichenTeil des Gebäudebestandes jedoch aufgrund von Denkmalschutzauflagen oder Platzmangel nicht geeignet.

Strenger werdende gesetzliche Anforderungen zwingen jedoch auch in diesen Fällen zur Durchführung von Wärmedämmmaßnahmen. Hierbei bietet sich dann eine Innenraumdämmung an.

Innenraumdämmungen auf Schaumkunststoff- oder Mineralwollebasis können jedoch zu Problemen mit Kondensationseffekten des in der Raumluft enthaltenen Wasserdampfs führen. So kann es beispielsweise zu einer Verlagerung des Taupunktes in die Wand kommen. Dabei kann vermehrt Wasser in die Baukonstruktion gelangen. Konkret kann Wasser als Schlagregen von außen in die Baukonstruktion gelangen, das größtenteils durch Diffusionsphänomene auch in Richtung der Innenseite der Außenwand transportiert wird und so zu einer Erhöhung des Wassergehaltes der Raumluft beiträgt.

Eine oftmals unterschätzte Wasserdampfquelle in Innenräumen ist ferner das stoffwechselbedingte Ausatmen von Wasserdampf und die Ausscheidung von Wasserdampf über die Haut der Bewohner und/oder Besucher.

Eine weitere Innenraumquelle für Wasserdampf bilden die alltäglichen Tätigkeiten wie Waschen, Bügeln, insbesondere Dampfbügeln, Kochen, Spülen und natürlich Baden und Duschen. Wasserdampf aus sämtlichen Quellen kann sich zu beträchtlichen Wassergehalten der Raumluft in den einzelnen Zimmern aufsummieren. Bei Abkühlung der wasserdampfhaltigen Raumluft kondensiert Wasser bevorzugt an kalten Außenwänden.

Sofern eine Innendämmung auf der Innenwand eines Wohnraumes angebracht ist, kommt es häufig vor, dass zwischen der Innenseite der Außenwand und der Rückseite der Innendämmung Wasser kondensiert. Eine solche hohe lokale Feuchtigkeit kann kurzfristig zu unerwünschter, zum Teil gesundheitsgefährdender Schimmelbildung sowie langfristig zu Bauschäden führen.

Im Stand der Technik sind für die Innenraumdämmung mit Aluminium kaschierte Kunststoffplatten, z.B. aus geschäumtem Polystyrol oder Polyurethan bekannt.

Neueste Vertreter dieser Dämmstoffe sind beispielsweise in WO 2010/138376 A1 beschrieben, welche aus geschlossenzelligen ungereiften Kügelchen aus expandiertem Polystyrol bestehen, bei welchen im Inneren ein Unterdruck anliegt und welche gute Dämmeigenschaften zeigen.

Neben Problemen der möglichen Ausgasung flüchtiger organischer Bestandteile und brandschutztechnisch möglicherweise bedenklichem Verhalten handelt es sich auch hierbei um sogenannte diffusionshemmende Systeme, die undurchlässig für Wasserdampf sind und somit als Dampfbremse wirken.

Zwar sind derartige kunststoffbasierte Dämmstoffe eine Möglichkeit zur Innenraumdämmung, jedoch verschlechtern sie das Raumklima und erfordern überdies eine ausgesprochen sorgfältige und luftdichte Verarbeitung. Bereits geringe Schäden an solchen Dämmstoffen, beispielsweise durch das Anbringen von Steckdosen oder Einschlagen von Nägeln, führen zu undichten Stellen und somit zur Ansammlung von Feuchtigkeit zwischen Innenseite der Außenwand und Rückseite der Kunststoffdämmung, die nicht mehr austrocknen kann.

Zur Vermeidung von Nachteilen, die durch eine Innenraumdämmung, insbesondere durch diffusionsgeschlossene Systeme auftreten, sind im Stand der Technik inzwischen sogenannte kapillaraktive Dämmstoffe auf Basis von Calciumsilikat bekannt. Sie nehmen das an der Innenseite der Außenwand entstehendes Kondens- oder Tauwasser auf und leiten sie in das Platteninnere. Dadurch kann Feuchtigkeit gut verteilt, zeitweise gespeichert und bei abnehmender Feuchtigkeitsbelastung wieder in den Innenraum abgegeben werden. Kapillaraktive Systeme bestehen aufgrund seiner hygroskopischen Eigenschaften bevorzugt aus Calciumsilikat. Während die kapillare Saugfähigkeit von Calciumsilikatplatten gut ist, ist ihr Wärmedämmvermögen mit einer Wärmeleitfähigkeit von ca. 60 mW/mK jedoch vergleichsweise schlecht. Weiterhin sind aus der DE-A-19606394 Glasfaservliese für den Innenraum bekannt, die ein Copolymerisat aus Acrylsäure/Maleinsàure (Mw = 160000) und Triethanolamin enthalten.

Nach alledem besteht nach wie vor im Bereich des Bauwesens ein Bedarf an einer zuverlässigen und einfachen Möglichkeit einer Innendämmung, die sowohl gute Wärmedämmeigenschaften als auch die Fähigkeit aufweist, die Feuchtigkeit im Bereich der Innendämmung zuverlässig und ohne Wasserkondensation zu regulieren. Eine solche Innendämmung zur Verfügung zu stellen, ist die Aufgabe, die der vorliegenden Erfindung zugrunde liegt.

Diese Aufgabe wird durch die Bereitstellung eines Mineralwolleproduktes gemäß Anspruch 1 gelöst.

Weiterhin wird die Aufgabe durch die Verwendung des Mineralwolleproduktes zur Innenraumdämmung gemäß Anspruch 12 gelöst.

Die Beschichtungsmasse gemäß Anspruch 13 löst die erfindungsgemäße Aufgabe ebenfalls.

Die vorliegende Erfindung betrifft ein Mineralwolleprodukt, welches reversibel Wasser bindet und welches wenigstens einseitig mit einer Beschichtungsmasse versehen ist, wobei die Beschichtungsmasse enthält:
a) wenigstens ein Polymer mit einer mittleren Molmasse von 50 000 bis 500 000 g/mol ausgewählt aus der Gruppe bestehend aus Polyvinylalkohol, Polyvinylacrylat, Polyvinylacetat, Polyvinylpyrrolidon und Copolymeren und Mischungen davon; und
b) wenigstens ein Polyol mit einer mittleren Molmasse von 2 000 bis 15 000 g/mol.

Die Beschichtungsmasse wird erfindungsgemäß durch eine Polymerisationsreaktion zwischen Polymer (a) und Polyol (b) hergestellt, so dass ein Copolymer entsteht. Polymer (a) und Polyol (b) können handelsübliche Komponenten sein.

Das erfindungsgemäße Mineralwolleprodukt bindet Wasser umgehend durch Absorption, wobei das absorbierte Wasser reversibel in die Beschichtungsmasse eingelagert wird. Wasser, welches durch Unterschreitung des Taupunkts ausfällt, steht somit nicht in flüssiger Form zur Verfügung. Dadurch wird verhindert, dass es sich zwischen Innenseite der Außenwand und Rückseite des Mineralwolleprodukts sammeln kann. Derart zwischengespeichertes Wasser kann nach und nach wieder in den Innenraum abgegeben werden, sobald dessen Feuchtigkeitsbelastung, beispielsweise durch regelmäßiges Lüften, abnimmt.

Nach erfolgter Abgabe der Feuchtigkeit in den Innenraum, ist das erfindungsgemäße Mineralwolleprodukt in der Lage erneut Wasser zu binden. Ein derartiger Zyklus aus Absorption und Abgabe von Wasser kann reversibel über einen langen Zeitraum von vielen Jahren stattfinden. Das Mineralwolleprodukt kann somit dauerhaft als Innenraumdämmung verbaut werden.

Das erfindungsgemäße Mineralwolleprodukt stellt vorteilhaft eine diffusionsoffene Dämmung dar, die wasserundurchlässig aber wasserdampfdurchlässig ist.

In einer bevorzugten Ausführungsform enthält die Beschichtungsmasse weitere Komponenten, die die Verbindung zwischen Beschichtungsmasse und Mineralwolle verbessern können. In einer bevorzugten Ausführungsform wird eine Komponente verwendet, die eine kovalente Bindung zwischen Beschichtungsmasse und Mineralwolle herstellt. Bevorzugt wird eine Komponente bzw. ein Linker auf der Basis eines aktivierten Silans verwendet. Bindemittel auf Basis eines aktivierten Silans sind beispielsweise in der DE102005056791, DE 102007047373 oder DE 102005063414 offenbart.

Es ist somit bevorzugt, dass die Beschichtungsmasse, die auf dem erfindungsgemäßen Mineralwolleprodukt aufgebracht ist, weiterhin enthält:
c) wenigstens ein aktiviertes Silan, ausgewählt aus einer Gruppe von aktivierten Silanen, die erhältlich sind durch die Umsetzung
eines Silans ausgewählt aus der Gruppe bestehend aus Mono-, Di- und Trilakoxysilanen mit einer C1- bis C8-Alkoxygruppe, wobei das Alkoxysilan wenigstens eine C2- bis C10-Aminoalkylgruppe oder eine C2- bis C10-N-Aminoalkylgruppe trägt; 3(2-Aminoethylamino)propyl-trimethoxysilan; (MeO₃)-Si-(CH₂)₃-NH-(CH₂)₃-Si-(OMe)₃; 3-Aminopropylsilantriol; Aminosilan mit ethoxyliertem Nonylphenolat; Phenyl-CH₂-NH-(CH₂)₃-NH-(CH₂)₃-Si-(OMe)₃*HCl; sowie deren Mischungen;
mit
einem enolisierbaren Keton mit wenigstens einer Carbonylgruppe oder einem Keton mit wenigstens einer OH-Gruppe, wobei das Keton 3 bis 12 Kohlenstoffatome enthält
oder mit
mit einem offenkettigen oder zyklischen Acetal oder Halbacetal oder geminalen Diol eines Ketons gemäß Formel (1): 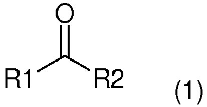 umfassend wenigstens eine Carbonylgruppe, die ein Acetal oder Halbacetal mit einem C1 bis C12-Alkyl oder Cycloalkylalkohol bildet, oder die ein geminales Diol mit Wasser bildet;
wobei R1 und R2 gleich oder ungleich, unabhängig voneinander ausgewählt sind aus der Gruppe bestehend aus: H; C1 bis C9-Alkyl; C2 bis C9-Alkenyl mit 1-4 Doppelbindungen, C1 bis C9-Hydroxyalkyl; Aryl mit 5 oder 6 C-Atomen im Cyclus oder Heteroaryl mit 1-4 Heteroatomen und 4-8 C-Atomen im Cyclus, Cycloalkyl mit 5-10 C-Atomen, Heterocycloalkyl mit 1-4 Heteroatomen und 4-8 C-Atomen im Cyclus, Carbonyl, Carboxyl, C1-C9-n-Alkylcarbonyl mit einer Position der Carbonylfunktion von 1-9, C1-C9-Alkoxycarbonly worin der Alkylrest insbesondere Methyl, Ethyl, Propyl oder Butyl ist
und wobei das Acetal, Halbacetal oder geminale Diol der folgenden allgemeinen Formel (2) entspricht: 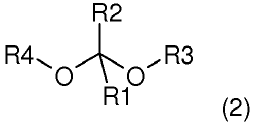 worin R3 und R4 gleich oder ungleich, unabhängig voneinander C1 bis C12-Alkyl- oder C1 bis C12-Cycloalkyl oder H ist, und R1 und R2 dieselbe Bedeutung wie in Formel (1) aufweisen oder in dem R3 ein n-Alkylrest mit 2-5 C-Atomen und R1 und R2 dieselbe Bedeutung wie in Formel (1) aufweisen oder R1 und R2 gleich H und R3 gleich 2-Oxypropyl ist.

Es hat sich gezeigt, dass die Beschichtungsmasse des Mineralwolleprodukts besonders gute Wasserbindungseigenschaften aufweist, wenn sie (a) 100 Massenteile Polymer, sowie (b) 1 bis 10 Massenteile Polyol enthält.

Es ist außerdem bevorzugt, dass die Beschichtungsmasse des Mineralwolleprodukts bezogen auf die 100 Massenteile des Polymers (a) weiterhin (c) 0,1 bis 5 Massenteile des aktivierten Silans enthält.

In einer bevorzugten Ausführungsform hat das Polymer (a) der Beschichtungsmasse eine mittlere Molmasse von 100000 bis 300000 g/mol, was eine gute Quellfähigkeit bei faktischer Wasserunlöslichkeit erlaubt.

Das Polymer (a) der Beschichtungsmasse ist im Weiteren vorzugsweise ausgewählt aus der Gruppe bestehend aus Polyvinylalkohol, Polyvinylacrylat, Polyvinylacetat, Polyvinylpyrrolidon und Copolymeren und Mischungen davon;

Das Polyol (b) der Beschichtungsmasse kann in einer bevorzugten Ausführungsform eine mittlere Molekülmasse von 4000 bis 12000 g/mol haben.

In einer bevorzugten Ausführungsform ist das Polyol (b) der Beschichtungsmasse ausgewählt aus der Gruppe bestehend aus Polyoxyethylen-Polyoxypropylen-Glycerylether, Polyethylen-Polypropylen-Glycol-Sorbitol-Ether oder Mischungen davon.

Es ist außerdem bevorzugt, dass die Endgruppen der Polyols (b) modifiziert sind. In einer bevorzugten Ausführungsform sind die Endgruppen des Polyols kovalent mit Epoxidresten oder Derivaten davon modifiziert. Reaktive Epoxidgruppen beschleunigen die Reaktion zwischen Polymer (a) und Polyol (b). Die Reste womit die Endgruppen des Polyols modifiziert sein können, sind ausgewählt aus der Gruppe bestehend aus Ethylenoxid, 3-Hydroxypropylenoxid, 3-Chlorpropylenoxid und Mischungen davon.

Um die Polymerisationsreaktion zwischen Polymer (a) und Polyol (b) weiter zu beschleunigen, findet diese vorzugsweise in der Anwesenheit einer nichtnukleophilen Base statt. Nichtnucleophile Basen sind sterisch anspruchsvolle Verbindungen, die ein Proton abstrahieren können, ohne jedoch selbst eine Substitutionsreaktion einzugehen. Nichtnukleophile Basen sind dem Fachmann bekannt. Die nichtnukleophile Base kann beispielhaft ausgewählt sein aus der Gruppe bestehend aus Triethylamin (TEA), Triethanolamin, 1-Hydroxyethan-(1,1-diphosphonsäure) (HEDP), Nitrilotris(methylenphosphonsäure) (NTMP), Diethylentriaminpenta(methylenphosphonsäure) (DTPMP) Ethylendiamintetra(methylenphosphonsäure) (EDTMP), Phosphonobutantricarbonsäure (PBTC).

Die Beschichtungsmasse, die auf dem erfindungsgemäßen Mineralwolleprodukt aufgetragen ist, kann weiterhin ein oder mehrere Additive enthalten. Übliche Additive sind pH-Regulatoren, Entschäumer, Farbstoffe, Flammschutzmittel und Antioxidationsmittel.

Es hat sich gezeigt, dass die Wirksamkeit des erfindungsgemäßen Mineralwollprodukts von der Auftragsmenge der Beschichtungsmasse abhängig ist. Die Auftragsmenge der Beschichtungsmasse beträgt vorteilhaft 0,05 bis 3 kg/m², insbesondere 0,2 bis 2 kg/m², vorzugsweise 0,5 bis 1,5 kg/m² und insbesondere bevorzugt 1 kg/m².

Die Beschichtungsmasse wird vorzugsweise auf einem flächig ausgebildeten Mineralwolleprodukt, z.B. einer Mineralwollematte, aufgetragen, Die Beschichtungsmasse kann mittels Verfahren, die dem Fachmann bekannt sind, auf Mineralwolle aufgebracht werden. Die Verfahren umfassen beispielsweise, Aufstreichen, Sprühen, Rakeln oder auch Tränken.

Die Beschichtungsmasse kann auf mit einem Bindemittel, z.B. einem Phenol/Formaldehydharz-Bindemittel gebundene Mineralwolle aufgetragen werden.

Alternativ kann die erfindungsgemäße Masse jedoch auch selbst als Bindemittel fungieren. In diesem Fall ist es vorteilhaft, dass die Masse das aktivierte Silan enthält, um eine stabile kovalente Bindung mit den Mineralwollefasern auszubilden. Die Beschichtungsmasse kann bei erhöhten Temperaturen ausgehärtet werden. Geeignete Vorrichtungen für das Aushärten der Beschichtungsmasse ist ein Härteofen. Vorzugsweise erfolgt das Aushärten bei Temperaturen von 100 bis 300 °C.

Ein derartig beschichtetes erfindungsgemäßes Mineralwolleprodukt eignet sich hervorragend für die Innendämmung, da mehrere Nachteile des gegenwärtigen Standes der Technik überwunden werden. Mit Mineralwolle wird ein Material mit einer niedrigen Wärmeleitfähigkeit von 35 mW/mK und kleiner verwendet, die deutlich unter jener von Calciumsilikatplatten liegt.

Außerdem besitzt das erfindungsgemäße beschichtete Mineralwolleprodukt ausgezeichnete reversible hygroskopische Eigenschaften, wodurch Feuchtigkeitsansammlungen in der Wandkonstruktion durch eine rasche Absorption bzw. ein Aufsaugen vermieden werden. Gleichzeitig wird absorbiertes Wasser nur wieder langsam und kontrolliert in Innenraumrichtung als Wasserdampf abgegeben. Ein derartiger reversibler Zyklus ist über lange Zeiträume hinweg wiederholbar.

Durch den Einsatz des erfindungsgemäßen Mineralwolleprodukts entfällt schließlich die Notwendigkeit einer häufig problematischen Dampfsperre und das Risiko von ausgeprägter und lange unbemerkter Schimmelbildung wird vermieden. Das Entfallen einer Dampfsperre bedingt ferner ein gesundes und ausgeglichenes Raumklima. Das diffusionsoffene erfindungsgemäße Mineralwolleprodukt ist selbst durch das hohe Absorptionsvermögen der Beschichtungsmasse undurchlässig für flüssig vorliegendes Wasser, jedoch gleichzeitig durchlässig für Wasserdampf.

Die vorliegende Erfindung betrifft weiterhin eine Beschichtungsmasse, enthaltend:
a) wenigstens ein Polymer mit einer mittleren Molmasse von 50 000 bis 500 000 g/mol ausgewählt aus der Gruppe bestehend aus Polyvinylalkohol, Polyvinylacrylat, Polyvinylacetat, Polyvinylpyrrolidon und Copolymeren; und Mischungen davon;
b) wenigstens ein Polyol mit einer mittleren Molmasse von 2 000 bis 15 000 g/mol
c) wenigstens ein aktiviertes Silan, ausgewählt aus einer Gruppe von aktivierten Silanen, die erhältlich sind durch die Umsetzung
eines Silans ausgewählt aus der Gruppe bestehend aus Mono-, Di- und Trilakoxysilanen mit einer C1- bis C8-Alkoxygruppe, wobei das Alkoxysilan wenigstens eine C2- bis C10-Aminoalkylgruppe oder eine C2- bis C10-N-Aminoalkylgruppe trägt; 3(2-Aminoethylamino)propyl-trimethoxysilan; (MeO₃)-Si-(CH₂)₃-NH-(CH₂)₃-Si-(OMe)₃; 3-Aminopropylsilantriol; Aminosilan mit ethoxyliertem Nonylphenolat; Phenyl-CH₂-NH-(CH₂)₃-NH-(CH₂)₃-Si-(OMe)₃*HCl; sowie deren Mischungen;
mit
einem enolisierbaren Keton mit wenigstens einer Carbonylgruppe oder einem Keton mit wenigstens einer OH-Gruppe, wobei das Keton 3 bis 12 Kohlenstoffatome enthält
oder mit
mit einem offenkettigen oder zyklischen Acetal oder Halbacetal oder geminalen Diol eines Ketons gemäß Formel (1): 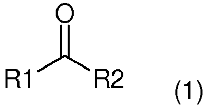 umfassend wenigstens eine Carbonylgruppe, die ein Acetal oder Halbacetal mit einem C1 bis C12-Alkyl oder Cycloalkylalkohol bildet, oder die ein geminales Diol mit Wasser bildet;
wobei R1 und R2 gleich oder ungleich, unabhängig voneinander ausgewählt sind aus der Gruppe bestehend aus: H; C1 bis C9-Alkyl; C2 bis C9-Alkenyl mit 1-4 Doppelbindungen, C1 bis C9-Hydroxyalkyl; Aryl mit 5 oder 6 C-Atomen im Cyclus oder Heteroaryl mit 1-4 Heteroatomen und 4-8 C-Atomen im Cyclus, Cycloalkyl mit 5-10 C-Atomen, Heterocycloalkyl mit 1-4 Heteroatomen und 4-8 C-Atomen im Cyclus, Carbonyl, Carboxyl, C1-C9-n-Alkylcarbonyl mit einer Position der Carbonylfunktion von 1-9, C1-C9-Alkoxycarbonyl worin der Alkylrest insbesondere Methyl, Ethyl, Propyl oder Butyl ist
und wobei das Acetal, Halbacetal oder geminale Diol der folgenden allgemeinen Formel (2) entspricht: 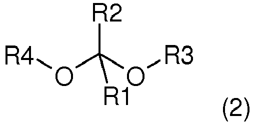 worin R3 und R4 gleich oder ungleich, unabhängig voneinander C1 bis C12-Alkyl- oder C1 bis C12-Cycloalkyl oder H ist, und R1 und R2 dieselbe Bedeutung wie in Formel (1) aufweisen oder in dem R3 ein n-Alkylrest mit 2-5 C-Atomen und R1 und R2 dieselbe Bedeutung wie in Formel (1) aufweisen oder R1 und R2 gleich H und R3 gleich 2-Oxypropyl ist.

Es ist bevorzugt, dass die erfindungsgemäße Beschichtungsmasse die Komponenten (a) bis (c) in folgenden Mengen enthält:
(a) 100 Massenteile Polymer;
(b) 1 bis 10 Massenteile Polyol;
(c) 0,1 bis 5 Massenteile aktiviertes Silan.

Die erfindungsgemäße Beschichtungsmasse hat ausgezeichnete hygroskopische Eigenschaften. Es hat sich herausgestellt, dass sie in etwa die Menge Wasser, die ihrem Eigengewicht entspricht, sehr rasch absorbieren kann. Die Bindung ist reversibel, das absorbierte Wasser wird dabei vorteilhaft nur sehr langsam, über mehrere Tage hinweg wieder in Dampfform abgegeben. Dieser Zyklus kann beliebig oft wiederholt werden, so dass die sich die Beschichtungsmasse zur Langzeitverwendung eignet.

Aufgrund des enthaltenen aktivierten Silans kann die erfindungsgemäße Beschichtungsmasse vorteilhaft kovalent an ein zu beschichtendes Mineralwolle-Substrat gebunden werden.

### Beispiele

### Beispiel 1

### Herstellung der Beschichtungsmassen

Es wurden drei modifizierte Grundharze mit einem Zielfeststoffgehalt von 50 bzw. 53 Masse-% aus folgenden Komponenten hergestellt:

| | Modifiziertes Grundharz 1 | Modifiziertes Grundharz 2 | Modifiziertes Grundharz 3 |
|---|---|---|---|
| Zielfeststoffgehalt | 53% | 50% | 50% |
| Verbindung | Menge (g) | Menge (g) | Menge (g) |
| wässrige Vinylacetathomopolymer-Dispersion (54 Gew.-% Feststoffanteil, mittleres Molgewicht 200000 g/mol) Resyn 1601, Celanese) | 150 | | |
| Wässrige Polyvinylacetat-Dispersion (60 % Feststoffanteil, mittleres Molgewicht 250 kd) Mowilith DNN, Celanese | | 150 | |
| Wässrige Polyvinylacetat-Dispersion (50 % Feststoffanteil, mittleres Molgewicht 250 kd) Mowilith DN50, Celanese | | | 150 |
| wässrige Polyvinylpyrrolidon-Dispersion 30% | 2,7 | 3 | 2,5 |
| (CAS 9082-00-2) (mittleres Molgewicht 50 000 g/mol) Luvitec K30, BASF | | | |
| Dihydroxyaceton, nicht-kosmetisch Merck | 0,16 | 0,18 | 0,15 |
| Entschäumer Drewplus 16002EG, Ashland | 0,72 | 0,81 | 0,68 |
| Wasser | 3,2 | 29,8 | |

Für die Herstellung der modifizierten Grundharze wurde bei Raumtemperatur die Basis-Dispersion vorgelegt, mit einem mechanischen Rührer gerührt, ggf. Verdünnungswasser hinzugefügt, unter weiterem Rühren zuerst der Entschäumer, anschließend die wässrige Polyvinylpyrrolidon-Dispersion und zuletzt Dihydroxyaceton zugegeben.

Weiterhin wurde eine Puffersalzlösung mit folgender Zusammensetzung hergestellt:

| Puffersalzlösung | |
|---|---|
| Verbindung | Menge (g) |
| Wasser | 50 |
| wässrige Glykolsäure-Lösung (70 % w/w) | 6,5 |
| Ethanolamin | 9,5 |
| Zr(CO₃)₂ | 4,2 |
| [Zn(CO₃)₂]*[Zn(OH)₂]₃ | 2,2 |

Für die Herstellung der Puffersalzlösung wird Wasser vorgelegt, Glycolsäure und Ethanolamin zugegeben, homogenisiert, dann in einer Kühltruhe bis kurz über den Gefrierpunkt auf etwa 2°C abgekühlt, dann Zr(CO₃)₂ zugegeben, bei 3 - 8°C homogenisiert, danach basisches Zinkcarbonat bei 12 -15°C hinzugefügt. Die Mischung wird etwa 5 min bei Raumtemperatur homogenisiert, und bei 14°C bis zur Verwendung gelagert.

Es wurden sieben verschiedene Beschichtungsmassen 1-1 bis 1-7 mit einem Zielfeststoffgehalt von 50 Masse-% mit den folgenden Zusammensetzungen hergestellt:

| Beschichtungsmasse | 1-1 | 1-2 | 1-3 | 1-4 | 1-5 | 1-6 | 1-7 |
|---|---|---|---|---|---|---|---|
| Verbindung | Menge (g) | | | | | | |
| Grundharz 1 | 50 | 50 | 50 | | | | |
| Grundharz 2 | | | | 50 | 50 | | |
| Grundharz 3 | | | | | | 50 | 50 |
| Polyoxyethylen-Polyoxypropylen-Glycerylether (CAS 9082-00-2) | 1,33 | | | 1,25 | | 1,25 | |
| Rockopol M1170, PPC | | | | | | | |
| Rokita S.A. | | | | | | | |
| Polyethylen-Polypropylen-Glycol-Sorbitol-Ether (CAS 56449-05-9) | | 1,33 | | | | | |
| Rockopol MH2000, PPC | | | | | | | |
| Rokita S.A. | | | | | | | |
| Polyoxyethylen-Polyoxypropylen-Glycerylether (CAS 9082-00-2) | | | 1,33 | | 1,25 | | 1,25 |
| Rockopol M5000, PPC | | | | | | | |
| Rokita S.A. | | | | | | | |
| 3-Aminopropyltriethoxysilan | 0,13 | 0,13 | 0,13 | 0,13 | 0,13 | 0,13 | 0,13 |
| Dihydroxyaceton | 0,07 | 0,07 | 0,07 | 0,07 | 0,07 | 0,07 | 0,07 |
| Puffersalzlösung | 0,47 | 0,47 | 0,47 | 0,43 | 0,43 | 0,43 | 0,43 |
| Wasser | 4,4 | 4,4 | 4,4 | 1,26 | 1,26 | 1,20 | 1,20 |

Für die Herstellung der Beschichtungsmasse wurde in einem ersten Schritt das 3-Aminopropyltriethoxysilan durch vorherige Reaktion mit Dihydroxyaceton aktiviert. Dazu wurde das Silan im Verdünnungswasser vorgelegt, das Dihydroxyaceton fest hinzugefügt und die Mischung bis zur kräftigen Gelbfärbung gerührt.

Das jeweilige Grundharz wird bei Raumtemperatur vorgelegt, mit einem mechanischen Rührer gerührt und unter Rühren nacheinander das Polyol, das aktivierte Silan, und zuletzt die Puffersalzlösung zugegeben.

### Beispiel 2

### Wasseraufnahmevermögen kompakter Probenkörper

### Herstellung kompakter Probenkörper

In einer kreisrunden Aluminiumschale wurden 15 g der jeweiligen Beschichtungsmassen 1-1 bis 1-3 gegeben und 2 h bei 150 °C ausgehärtet. Nach dem Abkühlen in einem Exsikkator, wurden die erhaltenen kompakten Kunststoffkörper 2-1 bis 2-3 in luftdichten PE-Beuteln gelagert.

### Bestimmung des Wasseraufnahmevermögens und des zeitlichen Verlaufs der Wasserabgabe der kompakten Probenkörper

Jeweils ein Probekörper wurde gewogen und so dessen Trockenmasse bestimmt. Die Trockenmassen der Kunststoffkörper 1 bis 3 betrugen:

| Proben-Nr. | 2-1 | 2-2 | 2-3 |
|---|---|---|---|
| Masse (g) | 5,53 | 5,55 | 5,63 |

Die drei Kunststoffkörper wurden anschließend für 22 h bei 30 °C in Wasser gelagert. Danach wurden die Probenkörper aus dem Wasser entnommen, das anhaftende Wasser abgetupft und zunächst für 2 h bei 25 °C und 62 % RH (relative Feuchtigkeit) gelagert. Im weiteren Verlauf wurden die Probenkörper ausschließlich bei 22 °C und 58 % RH gelagert. Die Probenkörper wurden in bestimmten Zeitabständen gewogen, wobei deren Gewicht erstmalig 5 h nach Entnahme aus dem Wasser bestimmt wurde, um nur durch den Kunststoff aufgenommenes Wasser zu erfassen.

In Tabelle 1 sind die Ergebnisse zusammengefasst. Spalten B bis D geben die Massen der Probenkörper 2-1 bis 2-3 nach unterschiedlichen Lagerzeiten an. In Spalten E bis G ist die in den Probenkörper 2-1 bis 2-3 nach unterschiedlichen Lagerzeiten noch enthaltene Wassermasse angegeben. Diese berechnet sich aus der Differenz der Massen der Probekörper 2-1 bis 2-3 gemäß Spalten B bis D abzüglich der jeweiligen Trockenmasse.

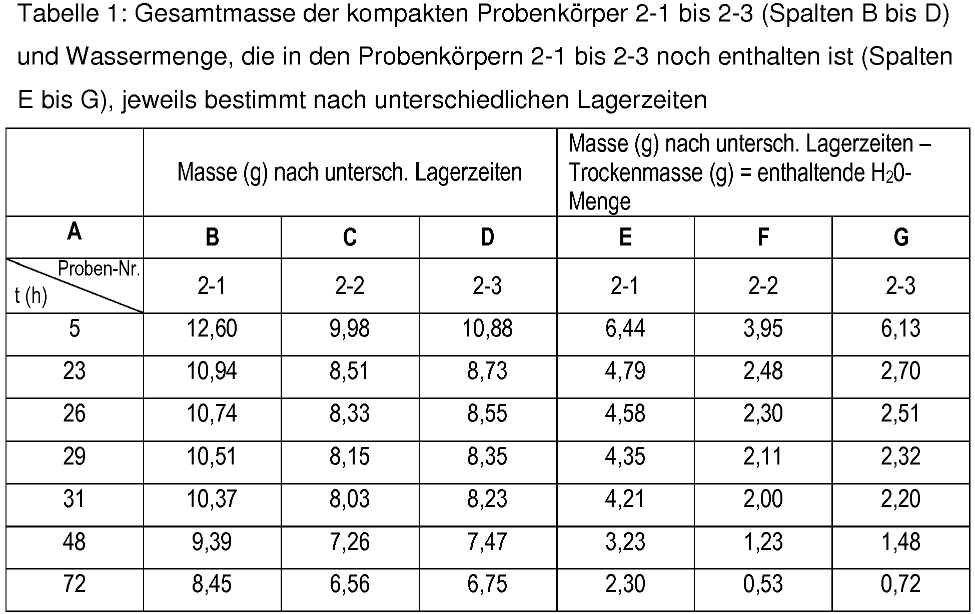

Alle drei Proben können in etwa das Äquivalent ihrer Masse an Wasser aufnehmen und zeigen vorteilhaft eine kontinuierliche und stark verzögerte Wasserabgabe, die auch nach drei Tagen noch nicht abgeschlossen ist.

### Beispiel 3

### Wasseraufnahmevermögen flächiger Probenkörper

### Herstellung beschichteter flächiger Probenkörper

Auf Blaubandfilter als Träger (Papier, 125 mm Durchmesser, 589 mm² Fläche) wurden je 10 g der Beschichtungsmassen 1-1 bis 1-3 aufgegeben, ohne das Material zu verstreichen. Anschließend wurden die Massen für 2 h bei ca. 150 °C gehärtet und anschließend im Exsikkator abgekühlt. Mit einer Schablone wurde ein kreisrundes Stück (Filter + Beschichtungsmasse) von 82 mm Durchmesser (0,00528 m²) ausgeschnitten und in einem PE-Beutel gelagert. Die Auftragsmenge betrug somit nach Trocknen ca. 5 g/0,00528 m² (ca. 947 g/m²).

### Vergleichsprobe

Als Vergleichsprobe wurde vom gleichen Filterpapiertyp ein kreisrundes Stück mit einem Durchmesser von 82 mm ausgeschnitten und analog der beschichteten Filterpapiere behandelt.

### Bestimmung des Wasseraufnahmevermögens und des zeitlichen Verlaufs der Wasserabgabe der beschichteten flächigen Probenkörper

Mit Beschichtungsmassen 1-1 bis 1-3 beschichtetes Filterpapier und weiterhin ein unbeschichtetes Filterpapier als Vergleich wurden gewogen und so deren Trockenmasse bestimmt. Die Trockenmassen der beschichteten Filterpapiere 3-1 bis 3-3 und des Vergleichs betrugen:

| Proben-Nr. | 3-1 | 3-2 | 3-3 | Vergleich |
|---|---|---|---|---|
| Masse (g) | 5,53 | 5,55 | 5,63 | 0,4472 |

Die flächigen Probenkörper (beschichtet und unbeschichtet) wurden anschließend für 22 h bei 30 °C in Wasser gelagert. Danach wurden die Probenkörper aus dem Wasser entnommen, das anhaftende Wasser abgetupft und zunächst für 2 h bei 25 °C und 62 % RH gelagert. Im weiteren Verlauf wurden die Probenkörper ausschließlich bei 22 °C und 58 % RH gelagert. Die Probenkörper wurden in bestimmten Zeitabständen gewogen, wobei deren Gewicht erstmalig 5 h nach Entnahme aus dem Wasser bestimmt wurde.

In Tabelle 2 sind die Ergebnisse zusammengefasst. Spalten B bis E geben die Massen der flächigen Probenkörper 3-1 bis 3-3 und der Vergleichsprobe nach unterschiedlichen Lagerzeiten an. In Spalten F bis I ist die noch enthaltene Wassermenge in den flächigen Probenkörpern 3-1 bis 3-3 und in der Vergleichsprobe angegeben. Diese berechnet sich aus der Differenz der Massen der flächigen Probekörper 3-1 bis 3-3 gemäß Spalten B bis E abzüglich der jeweiligen Trockenmasse

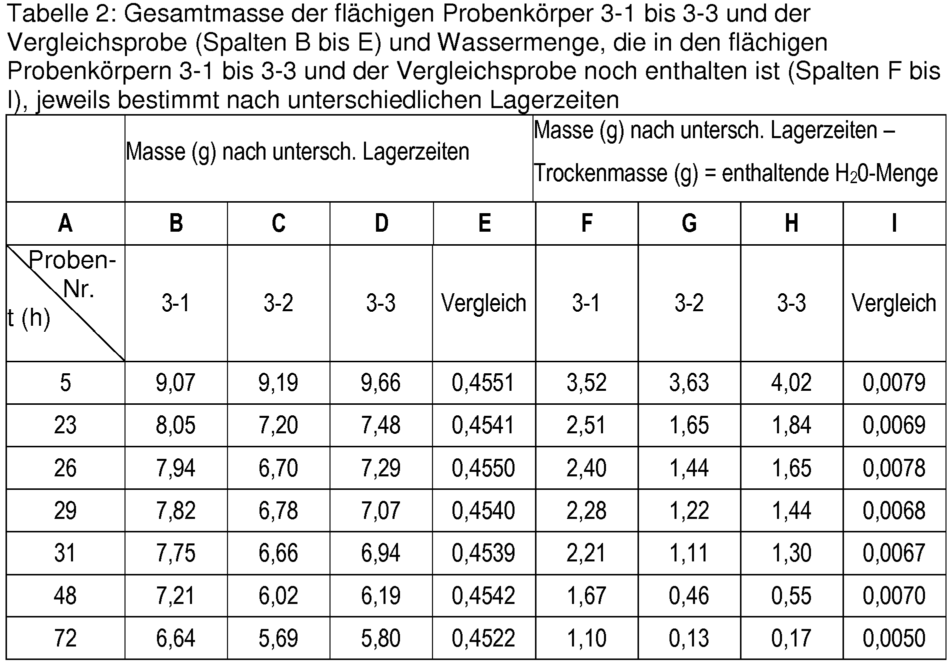

Die drei Proben waren in der Lage in etwa das Äquivalent der Beschichtungsmasse an Wasser aufzunehmen. Alle drei Proben zeigten ebenfalls eine stark verzögerte Wasserabgabe, die auch nach drei Tagen noch nicht abgeschlossen war. Die unbeschichtete Vergleichsprobe aus Papier hingegen hatte bereits nach 5 Stunden im Wesentlichen das gesamte Wasser abgegeben.

### Beispiel 4

### Beschichtete Mineralwolleprodukte

Bestimmung des Wasseraufnahmevermögens und des zeitlichen Verlaufs der

### Wasserabgabe der Mineralwolleprodukte

Auf Mineralwolleplatten der Abmessungen 20 x 20 x 6 cm wurden unterschiedliche Mengen der Beschichtungsmassen 1-1 bis 1-7 aufgetragen:
Auftragsmenge 1 (A1): 38 g trocken, entsprechend 76 g 50% und weiterhin 950 g/m²) Auftragsmenge 2 (A2): 50 g trocken, entsprechend 100 g 50% und weiterhin 1250 g/m²)

Zwei Sätze derart beschichteter Mineralwollplatten 4-1 bis 4-3 mit den Beschichtungsmassen 1-1 bis 1-3 wurden gewogen und anschließend wurden jeweils 76 g und 100 g der Beschichtungsmassen aufgetragen. Die Beschichtungsmassen wurden mit einem Spatel gleichmäßig auf der Mineralwolle verteilt und für 2 h bei 150 °C ausgehärtet. Als Referenz wurde ein unbehandeltes Stück Mineralwolle verwendet.

Die Wasseraufnahme dieser Probekörper wurde mittels eines Eintauchtests nach EN 1609 bestimmt. Hierzu wurden die Probekörper für 24 h in Wasser eingelegt und anschließend für 10 min gemäß dem Verfahren A der EN 1609 abgetropft, dann ausgewogen. Insgesamt wurde der Eintauchtest nach DIN EN 1609 dreimal hintereinander an den selben Proben zur Überprüfung der Reversibilität durchgeführt. Zu diesem Zweck wurden die Probekörper bis zur Gewichtskonstanz rückgetrocknet. Die jeweiligen Ergebnisse der Massenbestimmung der Probekörper vor und nach dem Eintauchen sind in Tabelle 3 zusammengefasst. Jeder Wert ist ein Mittelwert der Ergebnisse von 3 Probekörpern.

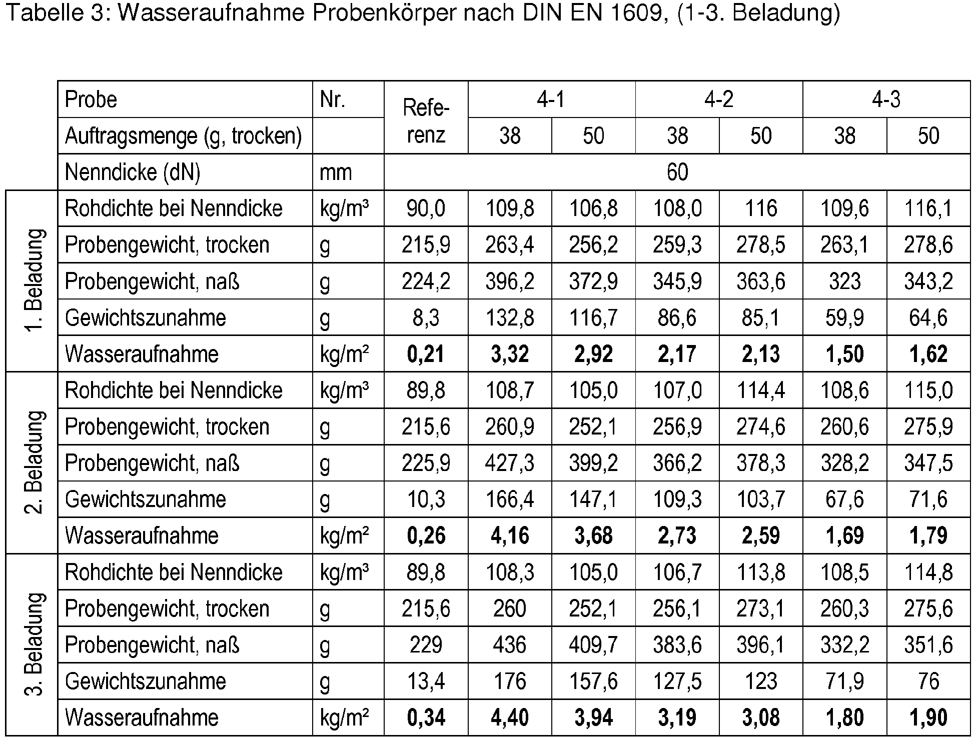

Aus dem Vergleich der Ergebnisse der Tabelle 3 zeigt sich, dass die Wasseraufnahme vollständig reversibel ist, sich während der Zyklen sogar ein ansteigendes Feuchtespeicherpotential ergibt.

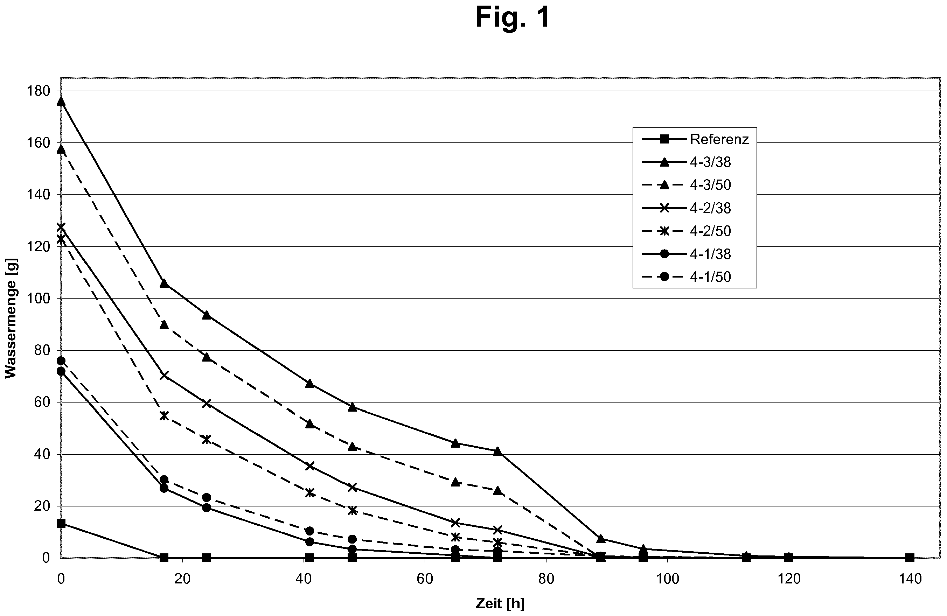

Die derart beladenen Probenkörper wurden bei 21 °C und 64% RH gelagert. Für den dritten Beladungsversuch wurde zu definierten Zeitpunkten die Masse der Probenkörper bestimmt und aus der Differenz die enthaltene Wassermenge berechnet, wobei die jeweiligen Ergebnisse in Tabelle 4 zusammengefasst sind. Der zeitliche Verlauf der Wasserabgabe ist in Fig. 1 dargestellt.

**Tabelle 4: Zeitliche Abnahme der Wassermenge im Probenkörper nach DIN EN 1609, (nach 3. Beladung)**

| Probe | Zeit (h) | Referenz | 4-1 | | 4-2 | | 4-3 | |
|---|---|---|---|---|---|---|---|---|
| Auftragsmenge (g, trocken) | | | 38 | 50 | 38 | 50 | 38 | 50 |
| Wassermenge (g) | 0 | 13,4 | 176 | 157,6 | 127,5 | 123 | 71,9 | 76 |
| | 17 | 0 | 106 | 90 | 70,3 | 54,9 | 26,9 | 30,2 |
| | 24 | 0 | 93,7 | 77,5 | 59,5 | 45,8 | 19,4 | 23,3 |
| | 41 | 0 | 67,2 | 51,8 | 35,5 | 25,2 | 6,2 | 10,4 |
| | 48 | 0 | 58,2 | 43,1 | 27,3 | 18,4 | 3,4 | 7,2 |
| | 65 | 0 | 44,4 | 29,3 | 13,6 | 8,1 | 1 | 3,2 |
| | 72 | 0 | 41,3 | 26,1 | 10,8 | 6 | 0 | 2,7 |
| | 89 | 0 | 7,4 | 0 | 0,4 | 0,6 | 0 | 0,7 |
| | 96 | 0 | 3,5 | 0 | 0,3 | 0,5 | 0 | 0,5 |
| | 113 | 0 | 0,8 | 0 | 0 | 0 | 0 | 0 |
| | 120 | 0 | 0,5 | 0 | 0 | 0 | 0 | 0 |
| | 140 | 0 | 0 | 0 | 0 | 0 | 0 | 0 |

Die Tabellenwerte wie auch deren grafische Darstellung in Fig. 1 zeigen, dass das beschichtete Mineralwolleprodukt eine große Speicherkapazität für Wasser aufweist. Dieses gespeicherte Wasser wird erheblich verzögert abgegeben, erst nach 4 Tagen ist der Vorgang der Rücktrocknung und Wasserabgabe praktisch abgeschlossen.

In einer zweiten Versuchsreihe wurden auf Mineralwolleplatten der Abmessungen 20 x 20 x 6 cm die Beschichtungsmassen 1-4 bis 1-7 mit der Auftragsmenge A2 (50 g, tr.) aufgetragen und die Untersuchungen zur Reversibilität und zur zeitlichen Abnahme der Wassermenge wie zuvor beschrieben durchgeführt. Die Daten sind in den Tabellen 5 und 6 zusammengefasst, und bzgl. des zeitlichen Verlaufs in Fig. 1 dargestellt. Die Daten der Referenzprobe sind lediglich zu Vergleichszwecken aus Tabelle 3 übernommen.

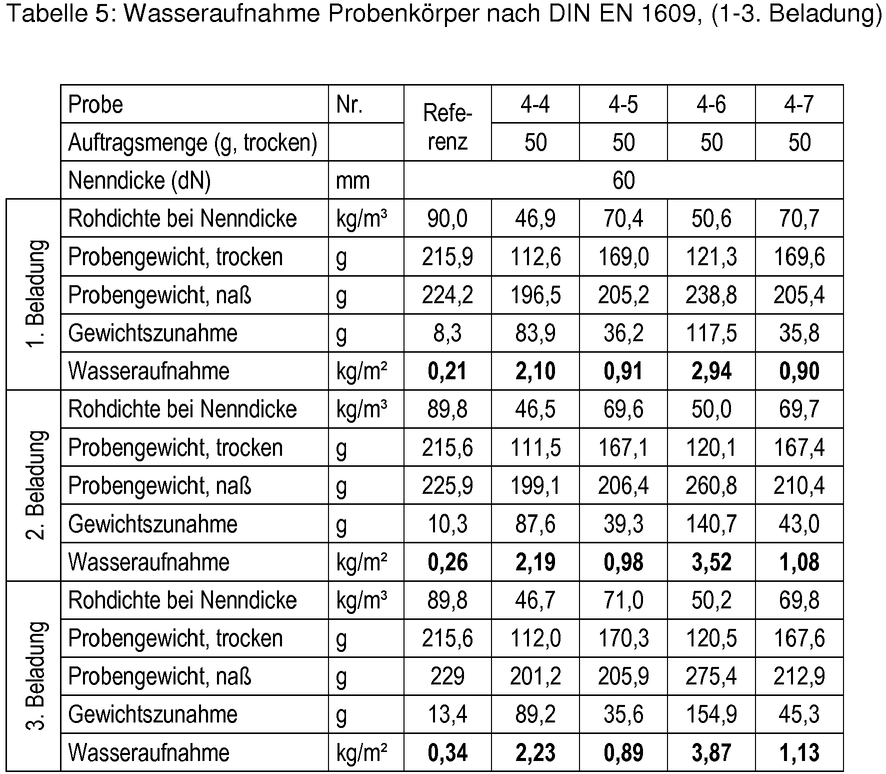

**Tabelle 6: Zeitliche Abnahme der Wassermenge im Probenkörper nach DIN EN 1609 (nach 3. Beladung)**

| Probe | Zeit (h) | Referenz | 4-4 | 4-5 | 4-6 | 4-7 |
|---|---|---|---|---|---|---|
| Auftragsmenge (g, trocken) | | | 50 | 50 | 50 | 50 |
| Wassermenge (g) | 0 | 13,4 | 83,9 | 36,2 | 117,5 | 35,8 |
| | 19 | 0 | 35,2 | 6,4 | 64,1 | 6,8 |
| | 26 | 0 | 24,9 | 1,8 | 51,8 | 1,2 |
| | 44 | 0 | 9,7 | 0 | 30,6 | 0 |
| | 51 | 0 | 5,9 | 0 | 23,5 | 0 |
| | 68 | 0 | 1,0 | 0 | 7,8 | 0 |
| | 75 | 0 | 0,2 | 0 | 5,3 | 0 |
| | 92 | 0 | 0 | 0 | 0,7 | 0 |
| | 99 | 0 | 0 | 0 | 0,2 | 0 |
| | 116 | 0 | 0 | 0 | 0 | 0 |

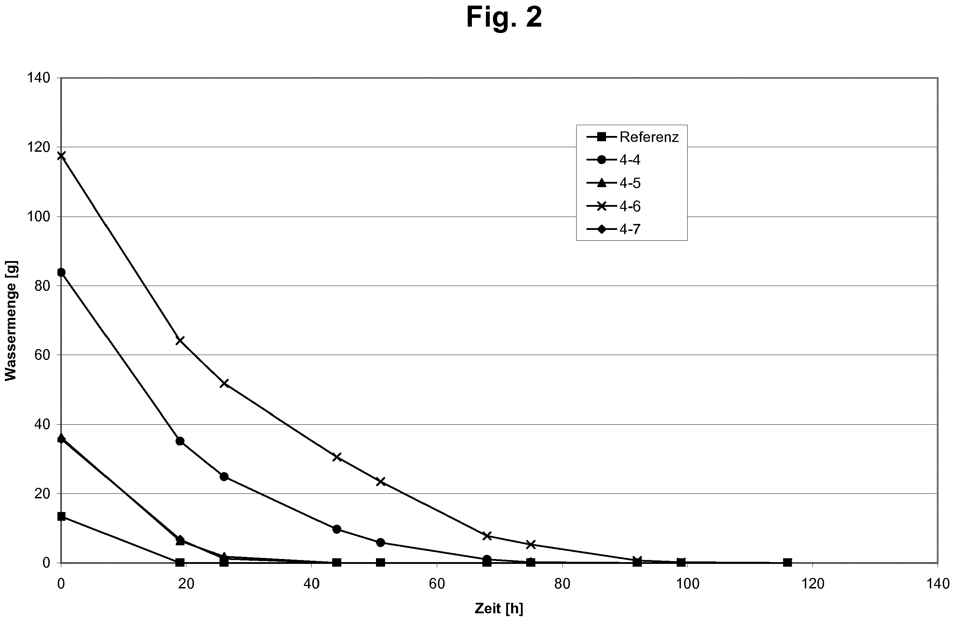

Die Ergebnisse der zweiten Versuchsreihe wie auch deren grafische Darstellung in Fig. 2 bestätigen die erheblich größere Speicherkapazität der beschichteten Mineralwolleproben für Wasser im Vergleich zur Referenz. Die vergleichsweise geringe Speicherkapazität der Proben 4-5 und 4-7 von etwa einem Faktor 3 im Vergleich zur Referenz wirkt sich auch in einer dementsprechend kürzeren Rücktrocknungszeit bis zur Gewichtskonstanz aus, die bei diesen Proben nach etwa 30 bis 35 Stunden erreicht ist (Basis Interpolation).

### Bestimmung der hygroskopischen Sorptionseigenschaften

Zur Bestimmung der hygroskopischen Sorptionseigenschaften wurden für die Probekörper 4-4 bis 4-7 gemäß der DIN EN ISO 12571, Ausgabe April 2000 bestimmt. Die Messwerte sind in der folgenden Tabelle 7 zusammengefasst.

**Tabelle 7: Messwerte der hygroskopischen Sorptionseigenschaft**

| Prüfklima | Referenz | 4-4 | 4-5 | 4-6 | 4-7 |
|---|---|---|---|---|---|
| 23°C/50% r.F. | 1,25 | 1,42 | 1,14 | 1,43 | 1,10 |
| 23°C/80% r.F. | 1,80 | 2,95 | 1,73 | 2,90 | 2,28 |
| 23°C/93% r.F. | 2,00 | 4,65 | 3,10 | 4,70 | 3,30 |
| 23°C/97% r.F. | 3,40 | 9,20 | 3,25 | 9,20 | 7,30 |

Die Messergebnisse zeigen, dass das erfindungsgemäße Beschichtungssystem im Fall der Ausführungsbeispiele 4-4, 4-6 und 4-7 neben der Wasseraufnahme insbesondere durch Saugen aus der Wand auch in der Lage ist, einen positiven Beitrag durch Absorption des Wasserdampfs zu leisten. Bei diesen Ausführungsbeispielen ist bereits bei einer relativen Feuchte von 80%, dem sog. baupraktischen Feuchtegehalt, eine signifikant höhere Sorptionsfeuchte feststellbar. Mit steigender relativer Feuchte verstärkt sich der Effekt, wobei bei diesen Feuchtegehalten im Mauerwerk üblicherweise unerwünschte Kapillarkondensation eintritt. Damit wird die zur Verfügung stehende Menge an Wasserdampf, die an den kalten Außenwänden potentiell kondensiert könnte, wirksam reduziert.

## Patentansprüche

1. Mineralwolleprodukt, welches reversibel Wasser bindet und welches wenigstens einseitig mit einer Beschichtungsmasse versehen ist, wobei die Beschichtungsmasse ein Copolymer aus:
a) wenigstens einem Polymer mit einer mittleren Molmasse von 50 000 bis 500 000 g/mol ausgewählt aus der Gruppe bestehend aus Polyvinylalkohol, Polyvinylacrylat, Polyvinylacetat, Polyvinylpyrrolidon und Copolymeren und Mischungen davon; und
b) wenigstens einem Polyol mit einer mittleren Molmasse von 2 000 bis 15 000 g/mol
enthält.

2. Mineralwolleprodukt nach Anspruch 1, wobei die Beschichtungsmasse weiterhin enthält:
c) wenigstens ein aktiviertes Silan, ausgewählt aus einer Gruppe von aktivierten Silanen, die erhältlich sind durch die Umsetzung
eines Silans ausgewählt aus der Gruppe bestehend aus Mono-, Di- und Trialkoxysilanen mit einer C1- bis C8-Alkoxygruppe, wobei das Alkoxysilan wenigstens eine C2- bis C10-Aminoalkylgruppe oder eine C2- bis C10-N-Aminoalkylgruppe trägt; 3(2-Aminoethylamino)propyl-trimethoxysilan; (MeO₃)-Si-(CH₂)₃-NH-(CH₂)₃-Si-(OMe)₃; 3-Aminopropylsilantriol; Aminosilan mit ethoxyliertem Nonylphenolat; Phenyl-CH₂-NH-(CH₂)₃-NH-(CH₂)₃-Si-(OMe)₃*HCl; sowie deren Mischungen;
mit
einem enolisierbaren Keton mit wenigstens einer Carbonylgruppe oder einem Keton mit wenigstens einer OH-Gruppe, wobei das Keton 3 bis 12 Kohlenstoffatome enthält
oder mit
mit einem offenkettigen oder zyklischen Acetal oder Halbacetal oder geminalen Diol eines Ketons gemäß Formel (1): 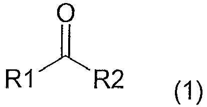 umfassend wenigstens eine Carbonylgruppe, die ein Acetal oder Halbacetal mit einem C1 bis C12-Alkyl oder Cycloalkylalkohol bildet, oder die ein geminales Diol mit Wasser bildet;
wobei R1 und R2 gleich oder ungleich, unabhängig voneinander ausgewählt sind aus der Gruppe bestehend aus: H; C1 bis C9-Alkyl; C2 bis C9-Alkenyl mit 1-4 Doppelbindungen, C1 bis C9-Hydroxyalkyl; Aryl mit 5 oder 6 C-Atomen im Cyclus oder Heteroaryl mit 1-4 Heteroatomen und 4-8 C-Atomen im Cyclus, Cycloalkyl mit 5-10 C-Atomen, Heterocycloalkyl mit 1-4 Heteroatomen und 4-8 C-Atomen im Cyclus, Carbonyl, Carboxyl, C1-C9-n-Alkylcarbonyl mit einer Position der Carbonylfunktion von 1-9, C1-C9-Alkoxycarbonly worin der Alkylrest insbesondere Methyl, Ethyl, Propyl oder Butyl ist
und wobei das Acetal, Halbacetal oder geminale Diol der folgenden allgemeinen Formel (2) entspricht: 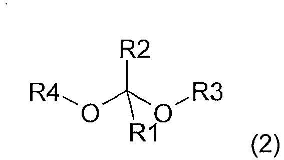 worin R3 und R4 gleich oder ungleich, unabhängig voneinander C1 bis C12-Alkyl- oder C1 bis C12-Cycloalkyl oder H ist, und R1 und R2 dieselbe Bedeutung wie in Formel (1) aufweisen oder R3 ein n-Alkylrest mit 2-5 C-Atomen ist und R1 und R2 dieselbe Bedeutung wie in Formel (1) aufweisen oder R1 und R2 gleich H und R3 gleich 2-Oxypropyl ist.

3. Mineralwolleprodukt nach Anspruch 1 oder 2, wobei die Beschichtungsmasse
a) 100 Massenteile Polymer; und
b) 1 bis 10 Massenteile Polyol
enthält.

4. Mineralwolleprodukt nach Anspruch 2, wobei die Beschichtungsmasse c) 0,1 bis 5 Massenteile aktiviertes Silan enthält.

5. Mineralwolleprodukt nach einem der vorhergehenden Ansprüche, wobei das Polymer (a) ausgewählt ist aus der Gruppe bestehend aus Polyvinylacetat, Polyvinylpyrrolidon und Mischungen davon.

6. Mineralwolleprodukt nach einem der vorhergehenden Ansprüche, wobei das Polyol (b) ausgewählt ist aus der Gruppe bestehend aus Polyethylenglykol (PEG), Polypropylenglykol (PPG) und Copolymeren oder Mischungen davon.

7. Mineralwolleprodukt nach einem der vorhergehenden Ansprüche, wobei das Polyol (b) ausgewählt ist aus der Gruppe bestehend aus Polyoxyethylen-Polyoxypropylen-Glycerylether, Polyethylen-Polypropylen-Glycol-Sorbitol-Ether und Mischungen davon.

8. Mineralwolleprodukt nach Anspruch 6 oder 7, wobei die Endgruppen des Polyols mit Resten modifiziert sind, die ausgewählt sind aus der Gruppe bestehend aus Ethylenoxid, 3-Hydroxypropylenoxid, 3-Chlorpropylenoxid und Mischungen davon.

9. Mineralwolleprodukt nach einem der vorhergehenden Ansprüche, wobei die Beschichtungsmasse weiterhin übliche Zusatzstoffe wie pH-Regulatoren, Entschäumer, Farbstoffe, Flammschutzmittel, Antioxidationsmittel umfasst.

10. Mineralwolleprodukt nach einem der vorhergehenden Ansprüche, wobei die Auftragsmenge der Beschichtungsmasse 0,05 bis 3 kg m2, insbesondere 0,2 bis 2 kg/m2, vorzugsweise 0,5 bis 1,5 kg/m2 und insbesondere bevorzugt 1 kg/m2 beträgt.

11. Verwendung eines Mineralwolleproduktes gemäß wenigstens einem der Ansprüche 1 bis 10 zur Innendämmung.

12. Beschichtungsmasse, enthaltend
a) wenigstens ein Polymer mit einer mittleren Molmasse von 50 000 bis 500 000 g/mol ausgewählt aus der Gruppe bestehend aus Polyvinylalkohol, Polyvinylacrylat, Polyvinylacetat, Polyvinylpyrrolidon und Copolymeren; und Mischungen davon;
b) wenigstens ein Polyol mit einer mittleren Molmasse von 2 000 bis 15 000 g/mol,
wobei das Polymer a) und das Polyol b) ein Copolymer bilden, und
c) wenigstens ein aktiviertes Silan, ausgewählt aus einer Gruppe von aktivierten Silanen, die erhältlich sind durch die Umsetzung
eines Silans ausgewählt aus der Gruppe bestehend aus Mono-, Di- und Trialkoxysilanen mit einer C1- bis C8-Alkoxygruppe, wobei das Alkoxysilan wenigstens eine C2- bis C10-Aminoalkylgruppe oder eine C2- bis C10-N-Aminoalkylgruppe trägt; 3(2-Aminoethylamino)propyl-trimethoxysilan; (MeO₃)-Si-(CH₂)₃-NH-(CH₂)₃-Si-(OMe)₃; 3-Aminopropylsilantriol; Aminosilan mit ethoxyliertem Nonylphenolat; Phenyl-CH₂-NH-(CH₂)₃-NH-(CH₂)₃-Si-(OMe)₃*HCl; sowie deren Mischungen;
mit
einem enolisierbaren Keton mit wenigstens einer Carbonylgruppe oder einem Keton mit wenigstens einer OH-Gruppe, wobei das Keton 3 bis 12 Kohlenstoffatome enthält
oder mit
mit einem offenkettigen oder zyklischen Acetal oder Halbacetal oder geminalen Diol eines Ketons gemäß Formel (1): 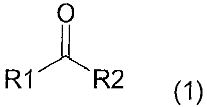 umfassend wenigstens eine Carbonylgruppe, die ein Acetal oder Halbacetal mit einem C1 bis C12-Alkyl oder Cycloalkylalkohol bildet, oder die ein geminales Diol mit Wasser bildet;
wobei R1 und R2 gleich oder ungleich, unabhängig voneinander ausgewählt sind aus der Gruppe bestehend aus: H; C1 bis C9-Alkyl; C2 bis C9-Alkenyl mit 1-4 Doppelbindungen, C1 bis C9-Hydroxyalkyl; Aryl mit 5 oder 6 C-Atomen im Cyclus oder Heteroaryl mit 1-4 Heteroatomen und 4-8 C-Atomen im Cyclus, Cycloalkyl mit 5-10 C-Atomen, Heterocycloalkyl mit 1-4 Heteroatomen und 4-8 C-Atomen im Cyclus, Carbonyl, Carboxyl, C1-C9-n-Alkylcarbonyl mit einer Position der Carbonylfunktion von 1-9, C1-C9-Alkoxycarbonly worin der Alkylrest insbesondere Methyl, Ethyl, Propyl oder Butyl ist
und wobei das Acetal, Halbacetal oder geminale Diol der folgenden allgemeinen Formel (2) entspricht: 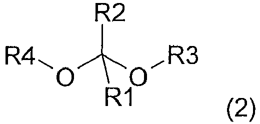 worin R3 und R4 gleich oder ungleich, unabhängig voneinander C1 bis C12-Alkyl- oder C1 bis C12-Cycloalkyl oder H ist, und R1 und R2 dieselbe Bedeutung wie in Formel (1) aufweisen oder R3 ein n-Alkylrest mit 2-5 C-Atomen ist und R1 und R2 dieselbe Bedeutung wie in Formel (1) aufweisen oder R1 und R2 gleich H und R3 gleich 2-Oxypropyl ist.

13. Beschichtungsmasse nach Anspruch 12, enthaltend
a) 100 Massenteile Polymer;
b) 1 bis 10 Massenteile Polyol;
c) 0,1 bis 5 Massenteile aktiviertes Silan.

## Claims

1. Mineral wool product that reversibly binds water and is coated at least on one side with a coating compound, the coating compound including a copolymer of:
a) at least one polymer having an average mol mass of 50,000 to 500,000 g/mol, selected from the group consisting of polyvinyl alcohol, polyvinyl acrylate, polyvinyl acetate, polyvinyl pyrrolidone and copolymers and mixtures thereof; and
b) at least one polyol having an average mol mass of 2,000 to 15,000 g/mol.

2. Mineral wool product according to claim 1, wherein the coating compound moreover includes:
c) at least one activated silane, selected from a group of activated silanes to be obtained through conversion
of a silane selected from the group consisting of mono-, di- and trialkoxysilanes with a C1 to C8 alcoxy group, the alcoxysilane carrying at least one C2 to C10-aminoalkyl group or a C2 to C10-N-aminoalkyl group; 3(2-aminoethylamino)propyl-trimethoxysilane; (MeO₃)-Si-(CH₂)₃-NH-(CH₂)₃-Si-(OMe)₃; 3-aminopropylsilanetriol; aminosilane with ethoxylated nonylphenolate; phenyl-CH₂-NH-(CH₂)₃-NH-(CH₂)₃-Si-(OMe)₃*HCl; and mixtures thereof;
with
an enolizable ketone with at least one carbonyl group or a ketone with at least one OH group, the ketone including 3 to 12 carbon atoms
or with
an open-chain or cyclic acetal or hemiacetal or the geminal diol of a ketone according to formula (1): 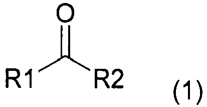 including at least one carbonyl group that forms an acetal or hemiacetal with a C1 to C12-alkyl or cyclo-alkyl alcohol, or a geminal diol with water;
wherein R1 and R2, equal or unequal, are selected independent of one another from the group consisting of: H; C1 to C9-alkyl; C2 to C9-alkenyl with 1-4 double bonds, C1 to C9-hydroxyalkyl; aryl with 5 or 6 C atoms in a cycle or hetero-aryl with 1-4 hetero atoms and 4-8 C atoms in a cycle, cycloalkyl with 5-10 C atoms, hetero cyclo-alkyl with 1-4 hetero atoms and 4-8 C atoms in a cycle, carbonyl, carboxyl, C1-C9-n-alkylcarbonyl with a position of the carbonyl function of 1-9, C1-C9-alkoxycarbonyl wherein the alkyl moiety particularly is methyl, ethyl, propyl or butyl
and wherein the acetal, hemiacetal or geminal diol corresponds to the subsequent general formula (2): 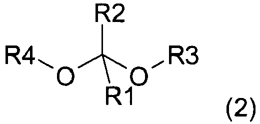 wherein R3 and R4, equal or unequal, independent of one another is C1 to C12-alkyl or C1 to C12 cyclo-alkyl or H, and R1 und R2 signify the same as in formula (1) or wherein R3 includes an n-alkyl moiety with 2-5 C atoms and R1 and R2 signify the same as in formula (1) or R1 and R2 is equal to H and R3 is equal to 2-oxypropyl.

3. Mineral wool product according to claim 1 or 2, wherein the coating compound includes
a) 100 parts per mass of a polymer; and
b) 1 to 10 parts per mass of polyol.

4. Mineral wool product according to claim 2, wherein the coating compound includes c) 0.1 to 5 parts per mass of activated silane.

5. Mineral wool product according to one of the preceding claims, wherein polymer (a) is selected from the group consisting of polyvinyl acetate, polyvinyl pyrrolidone and mixtures thereof.

6. Mineral wool product according to one of the preceding claims, wherein polyol (b) is selected from the group consisting of polyethylene glycol (PEG), polypropylene glycol (PPG) and copolymers or mixtures thereof.

7. Mineral wool product according to one of the preceding claims, wherein polyol (b) is selected from the group consisting of polyoxyethylene-polyoxypropylene-glycerylether, polyethylene-polypropylene-glycol-sorbitol-ether and mixtures thereof.

8. Mineral wool product according to claim 6 or 7, wherein the end groups of polyol are modified with moieties selected from the group consisting of ethylene oxide, 3-hydroxypropylene oxide, 3-chlorine propylene oxide and mixtures thereof.

9. Mineral wool product according to one of the preceding claims, wherein the coating compound further includes common additives such as pH regulators, defoamers, dyestuffs, flame retardants, and antioxidants.

10. Mineral wool product according to one of the preceding claims, wherein the application quantity of the coating compound is 0.05 to 3 kg/m², in particular 0.2 to 2 kg/m², preferably 0.5 to 1.5 kg/m², and a particularly preferred amount of 1 kg/m².

11. Use of the mineral product according to at least one of claims 1 to 10 for interior insulation.

12. Coating compound, including:
a) at least one polymer having an average mol mass of 50,000 to 500,000 g/mol, selected from the group consisting of polyvinyl alcohol, polyvinyl acrylate, polyvinyl acetate, polyvinyl pyrrolidone and copolymers and mixtures thereof;
b) at least one polyol having an average mol mass of 2,000 to 15,000 g/mol, polymer a) and polyol b) forming a copolymer, and
c) at least one activated silane, selected from a group of activated silanes to be obtained through conversion
of a silane selected from the group consisting of mono-, di- and trialcoxysilanes with a C1 to C8 alcoxy group, the alcoxysilane carrying at least one C2 to C10 amino alkyl group or a C2 to C10 N-amino alkyl group; 3(2-aminoethylamino)propyl-trimethoxysilane; (MeO₃)-Si-(CH₂)₃-NH-(CH₂)₃-Si-(OMe)₃; 3-aminopropylsilanetriol; amino silane with ethoxylated nonylphenolate; phenyl-CH₂-NH-(CH₂)₃-NH-(CH₂)₃-Si-(OMe)₃*HCl; and mixtures thereof;
with
an enolizable ketone having at least one carbonyl group or a ketone including at least one OH group, the ketone including 3 to 12 carbon atoms,
or with
an open-chain or cyclic acetal or hemiacetal or the geminal diol of a ketone according to formula (1): 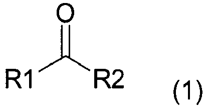 including at least one carbonyl group that forms an acetal or hemiacetal with a C1 to C12-alkyl or cycloalkyl alcohol, or a geminal diol with water;
wherein R1 and R2, equal or unequal, are selected independent of one another from the group consisting of: H; C1 to C9-alkyl; C2 to C9-alkenyl with 1-4 double bonds, C1 to C9-hydroxyalkyl; aryl with 5 or 6 C atoms in a cycle or hetero aryl with 1-4 hetero atoms and 4-8 C atoms in a cycle, cyclo-alkyl with 5-10 C atoms, hetero cyclo-alkyl with 1-4 hetero atoms and 4-8 C atoms in a cycle, carbonyl, Carboxyl, C1-C9-n-alkylcarbonyl with a position of the carbonyl function von 1-9, C1-C9-alkoxycarbonyl wherein the alkyl moiety particularly is methyl, ethyl, propyl or butyl,
and wherein the acetal, hemiacetal or geminal diol corresponds to subsequent general formula (2): 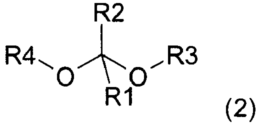 wherein R3 and R4, equal or unequal, independent of one another is C1 to C12-alkyl or C1 to C12 cycloalkyl or H, and R1 und R2 signify the same as in formula (1) or wherein R3 includes an n-alkyl moiety with 2-5 C atoms and R1 and R2 signify the same as in formula (1) or R1 and R2 is equal to H and R3 is equal to 2-oxypropyl.

13. Coating compound according to claim 12, including
a) 100 parts per mass of polymer;
b) 1 to 10 parts per mass of polyol;
c) 0.1 to 5 parts per mass of activated silane.

## Revendications

1. Produit en laine minérale, qui retient l'eau de manière réversible et qui est pourvu au moins d'un côté d'une masse de revêtement, dans lequel la masse de revêtement contient un copolymère composé de :
a) au moins un polymère avec une masse molaire moyenne de 50 000 à 500 000 g/mol, choisi parmi le groupe constitué d'alcool polyvinylique, d'acrylate polyvinylique, d'acétate de polyvinyle, de polyvinylpyrrolidone et de copolymères et de mélanges de ces derniers ; et
b) au moins un polyol avec une masse molaire moyenne de 2000 à 15 000 g/mol.

2. Produit en laine minérale selon la revendication 1, dans lequel la masse de revêtement contient en outre :
c) au moins un silane activé, choisi parmi un groupe de silanes activés, qui peuvent être obtenus par la mise en réaction
d'un silane choisi parmi le groupe constitué de mono-, di- et trialcoxysilanes avec un groupe alcoxy en C1 à C8, l'alcoxysilane supportant au moins un groupe aminoalkyle en C2 à C10 ou un groupe N-aminoalkyle en C2 à C10 ; de 3(2-aminoéthylamino)propyltriméthoxysilane ; de (MeO₃)-Si-(CH₂)₃-NH-(CH₂)₃-Si-(OMe)₃ ; de 3-aminopropylsilantriol ; d'aminosilane avec du nonylphénolate éthoxylé ; de phényl-CH₂-NH-(CH₂)₃-NH-(CH₂)₃-Si-(OMe)₃*HCl ; ainsi que leurs mélanges ;
avec
une cétone énolisable avec au moins un groupe carbonyle ou une cétone avec au moins un groupe OH, la cétone contenant 3 à 12 atomes de carbone
ou avec
un acétal ou un hémiacétal à chaîne ouverte ou cyclique ou un diol géminal d'une cétone selon la formule (1) : 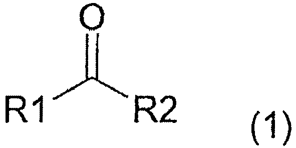 comprenant au moins un groupe carbonyl, qui forme un acétal ou un hémiacétal avec un alkyle en C1 à C12 ou un alcool de cycloalkyle ou qui forme un diol géminal avec de l'eau ;
dans lequel R1 et R2 sont identiques ou différents choisis indépendamment l'un de l'autre parmi le groupe constitué de : H, un alkyle en C1 à C9 ; un alcényle en C2 à C9 avec 1-4 doubles liaisons, un hydroxyalkyle en C1 à C9 ; un aryle avec 5 ou 6 atomes de C dans le cycle ou un hétéroaryle avec 1-4 hétéroatomes et 4-8 atomes de C dans le cycle, un cycloalkyle avec 5-10 atomes de C, un hétérocycloalkyle avec 1-4 hétéroatomes et 4-8 atomes de C dans le cycle, un carbonyle, un carboxyle, un n-alkylcarbonyle en C1-C9 avec une position de la fonction carbonyle de 1-9, un alkoxycarbonyle en C1-C9, où le radical alkyle est en particulier du méthyle, de l'éthyle, du propyle ou du butyle
et dans lequel l'acétale, l'hémiacétale ou le diol géminal correspondent à la formule générale (2) suivante : 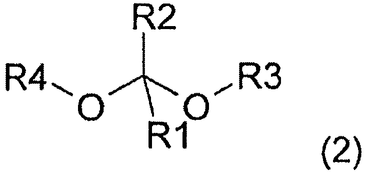 dans laquelle R3 et R4 sont identiques ou différents, sont indépendamment l'un de l'autre un alkyle en C1 à C12 ou un cycloalkyle en C1 à C12 ou H et R1 et R2 présentent la même signification que dans la formule (1) ou R3 est un radical de n-alkyle avec 2-5 atomes de C et R1 et R2 présentent la même signification que dans la formule (1) ou R1 et R2 sont identiques à H et R3 est identique à du 2-oxypropyle.

3. Produit en laine minérale selon la revendication 1 ou 2, dans lequel la masse de revêtement contient
a) 100 parties en masse de polymère ; et
b) 1 à 10 parties en masse de polyol.

4. Produit en laine minérale selon la revendication 2, dans lequel la masse de revêtement contient
c) 0,1 à 5 parties en masse de silane activé.

5. Produit en laine minérale selon l'une des revendications précédentes, dans lequel le polymère (a) est choisi parmi le groupe constitué d'acétate de polyvinyle, de polyvinylpyrrolidone et de mélanges de ces derniers.

6. Produit en laine minérale selon l'une des revendications précédentes, dans lequel le polyol (b) est choisi parmi le groupe constitué de polyéthylène glycol (PEG), de polypropylène glycol (PPG) et de copolymères ou de mélanges de ces derniers.

7. Produit en laine minérale selon l'une des revendications précédentes, dans lequel le polyol (b) est choisi parmi le groupe constitué d'éther glycérylique de polyoxyéthylène-polyoxypropylène, de polyéthylène-polypropylène-glycol-sorbitol-éther et de mélanges de ces derniers.

8. Produit en laine minérale selon la revendication 6 ou 7, dans lequel les groupes terminaux du polyol sont modifiés avec des radicaux, qui sont choisis parmi le groupe constitué d'oxyde d'éthylène, de 3-oxyde d'hydroxypropylène, de 3-oxyde de chloropropylène et de mélanges de ces derniers.

9. Produit en laine minérale selon l'une des revendications précédentes, dans lequel la masse de revêtement comprend en outre des additifs courants tels que des régulateurs de pH, des agents antimoussants, des colorants, des retardateurs de flamme, des agents antioxydants.

10. Produit en laine minérale selon l'une des revendications précédentes, dans lequel la quantité appliquée de la masse de revêtement va de 0,05 à 3 kg/m², en particulier de 0,2 à 2 kg/m², de préférence de 0,5 à 1,5 kg/m² et de manière particulièrement préférée est de 1 kg/m².

11. Utilisation d'un produit en laine minérale selon au moins l'une des revendications 1 à 10 servant à l'isolation intérieure.

12. Masse de revêtement contenant
a) au moins un polymère avec une masse molaire moyenne de 50 000 à 500 000 g/mol, choisi parmi le groupe constitué d'alcool polyvinylique, d'acrylate polyvinylique, d'acétate de polyvinyle, de polyvinylpyrrolidone et de copolymères ; et de mélanges de ces derniers ; et
b) au moins un polyol avec une masse molaire moyenne de 2000 à 15 000 g/mol,
dans lequel le polymère a) et le polyol b) forment un copolymère, et
c) au moins un silane activé choisi parmi un groupe de silanes activés, qui peuvent être obtenus par la mise en réaction
d'un silane choisi parmi le groupe constitué de mono-, di- et trialcoxysilanes avec un groupe alkoxy en C1 à C8, l'alcoxysilane supportant au moins un groupe aminoalkyle en C2 à C10 ou un groupe N-aminoalkyle en C2 à C10 ; de 3(2-aminoéthylamino)propyltriméthoxysilane ; de (MeO₃)-Si-(CH₂)₃-NH-(CH₂)₃-Si-(OMe)₃ ; de 3-aminopropylsilantriol ; d'aminosilane avec du nonylphénolate éthoxylé ; de phényl-CH₂-NH-(CH₂)₃-NH-(CH₂)₃-Si-(OMe)₃*HCl ; ainsi que de leurs mélanges ; avec
une cétone énolisable ayant au moins un groupe carbonyle ou une cétone avec au moins un groupe OH, la cétone contenant 3 à 12 atomes de carbone
ou avec
un acétal ou un hémiacétal à chaîne ouverte ou cyclique ou un diol géminal d'une cétone selon la formule (1) : 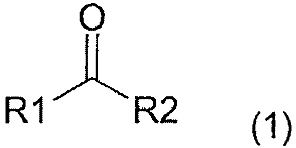 comprenant au moins un groupe carbonyle, qui forme un acétal ou un hémiacétal avec un alkyle en C1 à C12 ou un alcool de cycloalkyle ou qui forme un diol géminal avec de l'eau ;
dans lequel R1 et R2 sont identiques ou différents choisis indépendamment l'un de l'autre parmi le groupe constitué de : H, un alkyle en C1 à C9 ; un alcényle en C2 à C9 avec 1-4 doubles liaisons, un hydroxyalkyle en C1 à C9 ; un aryle avec 5 ou 6 atomes de C dans le cycle ou un hétéroaryle avec 1-4 hétéroatomes et 4-8 atomes de C dans le cycle, un cycloalkyle avec 5-10 atomes de C, un hétérocycloalkyle avec 1-4 hétéroaromes et 4-8 atomes de C dans le cycle, un carbonyle, un carboxyle, un n-alkylcarbonyle en C1-C9 avec une position de la fonction carbonyle de 1-9, un alkoxycarbonyle en C1-C9, où le radical alkyle est en particulier du méthyle, de l'éthyle, du propyle ou du butyle
et dans lequel l'acétale, l'hémiacétale ou le diol géminal correspondent à la formule générale (2) suivante : 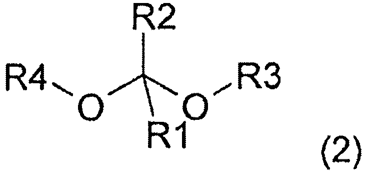 dans laquelle R3 et R4 sont identiques ou différents, sont indépendamment l'un de l'autre un alkyle en C1 à C12 ou un cycloalkyle en C1 à C12 ou H et R1 et R2 présentent la même signification que dans la formule (1) ou R3 est un radical de n-alkyle avec 2-5 atomes de C et R1 et R2 présentent la même signification que dans la formule (1) ou R1 et R2 sont identiques à H et R3 est identique à du 2-oxypropyle.

13. Masse de revêtement selon la revendication 12, contenant
a) 100 parties de masse de polymère ;
b) 1 à 10 parties de masse de polyol ;
c) 0,1 à 5 parties de masse d'un silane activé.
